# EUROPÄISCHE PATENTSCHRIFT

(11) **EP 3 192 628 B1**
(45) Veröffentlichungstag und Bekanntmachung des Hinweises auf die Patenterteilung: **04.09.2019**
(21) Anmeldenummer: 17151628.9
(22) Anmeldetag: 16.01.2017
(51) Int. Cl.: B28B 1/24, C04B 35/634

(54) **HERSTELLUNG VON DICKWANDIGEN BAUTEILEN MITTELS SPRITZGIESSEN**
PRODUCTION OF THICK-WALLED COMPONENTS BY MEANS OF INJECTION MOULDING
FABRICATION D'ÉLÉMENTS STRUCTURAUX À PAROI ÉPAISSE AU MOYEN DU MOULAGE PAR INJECTION

(30) Priorität: 15.01.2016 DE 102016200483; 19.01.2016 DE 102016200585
(43) Veröffentlichungstag der Anmeldung: 19.07.2017
(73) Patentinhaber: CeramTec GmbH, 73207 Plochingen (DE)
(72) Erfinder: Kuntz, Dr. Meinhard, 73733 Esslingen (DE); Meßmer, Moritz, 70372 Stuttgart (DE); Heinzmann, Simon, 73312 Geislingen/Aufhausen (DE); Thoma, Clemens, 71101 Schönaich (DE)
(74) Vertreter: Fehrenbacher, Eckhard Anton

(56) Entgegenhaltungen:
- EP-A1- 2 394 974
- EP-A1- 2 597 076
- EP-A2- 0 420 284
- WO-A1-92/02470
- CN-A- 102 719 080
- JP-A- 2000 117 714
- YANNIG THOMAS ET AL: ADVANCED PERFORMANCE MATERIALS, Bd. 5, Nr. 1/2, 1. Januar 1998 (1998-01-01), Seiten 25-41, XP055027646, ISSN: 0929-1881, DOI: 10.1023/A:1008681920391
- KRAUSS VIVIAN ALEXANDRA ET AL: "Rheological properties of alumina injection feedstocks", MATERIALS RESEARCH, DOT EDITORA CR C PRG AO ELETRÔNICA, SAO CARLOS, BR, Bd. 8, Nr. 2, 1. April 2005 (2005-04-01), Seiten 187-189, XP002478752, ISSN: 1516-1439, DOI: 10.1590/S1516-14392005000200018 [gefunden am 2005-04-01]
- Nutthita Chuankrerkkul: "Physical and Mechanical Properties of Zirconia Toughened Alumina (ZTA) Composites Fabricated by Powder Injection Moulding", Chiang Mai J. Sci, 1. Januar 2016 (2016-01-01), XP055368269, Gefunden im Internet: URL:http://www.thaiscience.info/journals/A rticle/CMJS/10980118.pdf [gefunden am 2017-04-28]
- BERENIKA HAUSNEROVA ET AL: "Polyolefin Backbone Substitution in Binders for Low Temperature Powder Injection Moulding Feedstocks", MOLECULES, Bd. 19, 27. Februar 2014 (2014-02-27), Seiten 2748-2760, XP002769736, ISSN: 1420-3049, DOI: 10.3390/molecules19032748
- Zdravko Stanimirovi ET AL: "Ceramic Injection Molding" In: "Some Critical Issues for Injection Molding", 23. März 2012 (2012-03-23), InTech, XP055368270, ISBN: 978-953-51-0297-7 DOI: 10.5772/34660, * Seite 133, Absatz 2 - Seite 136, Absatz 4; Abbildungen 4,5 *

## Beschreibung

Gegenstand der vorliegenden Erfindung ist die Herstellung von dickwandigen und/oder großvolumigen keramischen Bauteilen mittels Spritzgießen, sowie ein Werkstoff- und Bindersystem (Feedstock) zum Spritzgießen dickwandiger und/oder großvolumiger keramischer Bauteile.

Das Spritzgießen als formgebendes Verfahren ist für die endkonturnahe Formung und Fertigung von Kunststoffen hinlänglich bekannt und wird großindustriell in der kunststoffverarbeitenden Industrie verwendet. Spritzguss-Verfahren sind auch für die endkonturnahe Formgebung von technischen Keramiken bekannt und werden unter der Abkürzung CIM (ceramic injection moulding) zusammengefasst. Der Nachteil an den bekannten Verfahren im Stand der Technik ist, dass Spritzgießen von feindispersen Keramikpulvern mit hoher spezifischen Oberfläche von > 10 m²/g bisher nur für die Herstellung von Formteilen geeignet sind, die eine Wandstärke von ≤ 5mm aufweisen.

EP 0 420 284 A2 beschreibt ein keramisches Werkstoff- und Bindersystem, zum Spritzgießen von dickwandigen und/oder großvolumigen Bauteilen mit Wandstärken im Bereich von mehr als 5 mm und/oder Volumen von mindestens 15 cm3, enthaltend ein Bindersystem, das eine Mischung aus mindestens zwei organischen Verbindungen ist und eine Keramik, die Zirkondioxid enthält und das Keramikpulver eine spezifische Oberfläche, gemessen nach der BET Methode, im Bereich von 8 - 30 m²/g aufweist.Der vorliegenden Erfindung lag deshalb die Aufgabe zugrunde ein Verfahren zu entwickeln, welches die Herstellung von dickwandigen und/oder großvolumigen keramischen Bauteilen mittels Spritzgießen erlaubt, wobei die so hergestellten dickwandigen Bauteile sich durch ein lunkerfreies, dichtes Gefüge auszeichnen. Eine weitere Aufgabe der Erfindung war die Entwicklung eines Werkstoffes und eines Bindersystems mit dem dickwandige und/oder großvolumige keramischer Bauteile mittels Spritzgießen hergestellt werden können.

Mit dem Begriff "dickwandige Bauteile" sind im Sinne der vorliegenden Erfindung Bauteile gemeint die eine Wandstärke von mehr als 5 mm, bevorzugt Wandstärken im Bereich von 6 bis 25 mm und besonders bevorzugt 6 bis 15 mm aufweisen.

Im Sinne der vorliegenden Erfindung sind mit dem Begriff "großvolumige Bauteile" solche gemeint, die ein Volumen von mindestens 15 cm³, bevorzugt Volumen im Bereich 15 - 150 cm³ und besonders bevorzugt 15 - 120 cm³ aufweisen.

Die zugrundeligende Aufgabe der vorliegenden Erfindung wurde durch die in den unabhängigen Ansprüchen beschriebenen Merkmale gelöst. Bevorzugte Ausführungsformen sind in den Unteransprüchen angegeben.

Das Spritzgießen von keramischen Bauteilen erfolgt erfindungsgemäß mit einem speziell hergestellten Feedstock, der aus einem Keramikpulver und einem Binder besteht. Das Keramikpulver wird nass gemahlen und anschließend getrocknet. Pulver und organische Binderkomponenten werden vorgemischt und anschließend zu einem homogenen Feedstock plastifiziert.

Erfindungsgemäß ist die verwendete Keramik Aluminiumoxid, Zirkonoxid oder Mischungen daraus. Entsprechend einer vorteilhaften Ausführungsform beträgt der Anteil des Aluminiumoxid-/Chromoxid-Mischkristalls mindestens 70 Vol.-% mit einem Chromoxidanteil von 0,01 bis 2,32 Gew.-%, bezogen auf Aluminiumoxid, wobei 2 bis 30 Vol. % Zirkoniumdioxid in die Matrix eingelagert sind, und das Zirkoniumdioxid 0,27 bis 2,85 Mol% Yttriumoxid, bezogen auf die Mischung aus Zirkoniumdioxid und Yttriumoxid, enthält und das Zirkoniumdioxid in einer 2 µm nicht überschreitenden durchschnittlichen Korngröße überwiegend in der tetragonalen Modifikation vorliegt. Eine Menge von 0,27 bis 2,85 Mol% Yttriumoxid, bezogen auf die Mischung aus Zirkoniumdioxid und Yttriumoxid entspricht 0,5 bis 5,4 Gew.-% Yttriumoxid, bezogen auf Zirkoniumdioxid. Bei einem solchen Sinterformkörper liegt zwischen dem das Yttriumoxid enthaltenden Zirkoniumdioxid und Chromoxid ein molares Verhältnis von 370 : 1 bis 34 : 1 vor.

Gemäß einer weiteren besonders bevorzugten Ausführungsform der Erfindung besteht der Matrixwerkstoff aus einem Aluminiumoxid-/Chromoxid-Mischkristall und aus einem weiteren Mischkristall der Formel SrAl₁₂₋ₓCrₓO₁₉, wobei x einen Wert von 0,0007 bis 0,045 hat. Dabei wurde festgestellt, dass sich bei Anwesenheit von Strontiumoxid Platelets im Gefüge bilden, die er allgemeinen Formel SrAl₁₂₋ₓCrₓO₁₉ entsprechen.

Bevorzugt wird für die vorliegende Erfindung eine bestimmte Keramikzusammensetzung verwendet, die 70 bis 90 Volumenanteile Aluminiumoxid mit Chromdotierung, 12 bis 22 Volumenanteile Zirkonoxid mit Stabilisierungsoxiden und 1 bis 5 Volumenanteile Strontiumaluminat der Formel SrAl₁₂₋ₓCrₓO₁₉ mit variabler Cr-Dotierung enthält, wobei x einen Wert von 0,0007 bis 0,045 hat.

Gemäß einer besonders bevorzugten weiteren Ausführungsform der Erfindung wird das molare Verhältnis des die stabilisierenden Oxide enthaltenden Zirkoniumdioxids zu Chromoxid in Abhängigkeit des Zirkoniumdioxidanteils so eingestellt, dass bei niedrigen Zirkoniumdioxidanteilen auch geringe Chromoxidmengen vorliegen. Ganz besonders hat sich dabei eine Einstellung des molaren Verhältnisses Zirkoniumdioxid : Chromoxid erwiesen, die im Bereich von

| | | | | | | |
|---|---|---|---|---|---|---|
| | 2 - 5 Vol.-% | Zirkoniumdioxid | 1.000 | : | 1 bis | 100 : 1 |
| > | 5 - 15 Vol.-% | Zirkoniumdioxid | 200 | : | 1 bis | 40 : 1 |
| > | 15 - 30 Vol.-% | Zirkoniumdioxid | 100 | : | 1 bis | 20 : 1 |
| > | 30 - 40 Vol.-% | Zirkoniumdioxid | 40 | : | 1 bis | 20 : 1 |

beträgt.

Gemäß einer weiteren ganz besonders bevorzugten Ausführungsform liegt der Anteil des in tetragonaler Modifikation vorliegenden Zirkoniumdioxids bei mehr als 95 Vol.-%, bevorzugt mehr als 98 Vol.-%, besonders bevorzugt mehr als 99 Vol.-% wobei lediglich bis zu 5 Vol.-%, bevorzugt bis zu 2 Vol.-%,besonders bevorzugt bis zu 1 Vol.-% insgesamt in der kubischen und/oder monoklinen Modifikation vorliegen. Die Korngröße (gemessen mittels Laser Diffraktometrie) des eingelagerten Zirkoniumdioxids ist im Bereich von 0,2 bis 1,5 µm. Demgegenüber hat sich eine durchschnittliche Korngröße des Aluminiumoxid-/Chromoxid-Mischkristalls im Bereich von 0,8 bis 1,5 µm als besonders geeignet erwiesen. Die Körner des Mischkristalls der Formel SrAl₁₂₋ₓCrₓO₁₉, wobei x einen

Wert von 0,0007 bis 0,045 hat, weisen ein Längen/Dickenverhältnis im Bereich von 5 : 1 bis 15 : 1 auf. Ihre Maximallänge beträgt dabei 12 µm, ihre Maximaldicke 1,5 µm.

Erfindungsgemäß enthält der Matrixwerkstoff in einer Ausgestaltung einen Aluminiumoxid-/Chromoxid-Mischkristall und einen weiteren Mischkristall gemäß einer der allgemeinen Formeln Me¹Al₁₁₋ₓCrₓO₁₇, Me²Al₁₂₋ₓCrₓO₁₉, Me^{2'}Al₁₂₋ₓCrₓO₁₉ oder Me³Al₁₁₋ₓCrₓO₁₈ wobei Me¹ für ein Alkalimetall, Me² für ein Erdalkalimetall, Me^{2'} für Cadmium, Blei oder Quecksilber und Me³ für ein Seltenerdmetall steht. Ebenfalls dem Matrixwerkstoff zugesetzt werden kann als Mischkristall La_{0,9}Al_{11,76-x}CrₓO₁₉. x kann dabei Werte von 0,0007 bis 0,045 annehmen.

Die vorstehend beschriebene erfindungsgemäße Keramik wird als Pulver zur Herstellung des Feedstocks eingesetzt, wobei das Keramikpulver eine spezifische Oberfläche (BET) im Bereich von 8 -30 m²/g, bevorzugt 10 - 25 m²/g und besonders bevorzugt 11 - 18 m²/g aufweist.

Vor dem Spritzgießen wird das Keramikpulver mit einem Bindersystem vermischt, wobei das Bindersystem ein oder mehrere organische Verbindungen enthalten kann. Bevozugt umfasst das erfindungsgemäße Bindersystem mindestens zwei organische Polymerverbindungen. Weiterhin bevorzugt ist, dass das erfindungsgemäße Bindersystem zusätzlich zu den mindestens zwei Polymerverbindungen einen Dispergator umfasst.

Das Bindersystem umfasst Verbindungen ausgewählt aus der Gruppe, bestehend aus thermoplastischen Homo- oder Copolymeren auf Basis von Polyethylen PE, Polypropylen PP, Polyoxymethylen POM, Polyethylenglykol PEG, Polymethylenmethacrylat PMMA, Polyvinylacetat PVA, Polystyrol PS, Polyvinylbutyral PVB, Polycarbonat PC; Wachsen (Paraffinwachse, mikrokristalline Wachse, synthetische Hydrocarbonwachse, oxidische Polyethylenwachse, natürliche Wachse) und Dispergatoren (gesättigte und ungesättigte Monocarbonsäuren wie Laurinsäure, Palmitinsäure, Stearinsäure, Behensäure, Palmitoleinsäure, Ölsäure oder Mischungen daraus, Polyeethylenglykolalkylether, alkylierte Citrate).

Erfindungsgemäß wird bevorzugt eine Mischung verschiedener Verbindungen als Bindersystem verwendet, wobei die einzelenen Verbindungen in einem bestimmten Verhältnis zueinander stehen. Bevorzugt ist eine Zusammensetzung umfassend PVB mit einem Anteil am Bindersystem im Bereich von 5 - 60%, bevorzugt von 5 - 55% und besonders bevorzugt von 5 - 50%, PEG mit einem Anteil am Bindersystem im Bereich von 10 - 80%, bevorzugt von 10 - 75% und besonders bevorzugt von 10 - 70% und eine gesättigte Monocarbonsäure mit einem Anteil am Bindersystem im Bereich von 5 - 50%, bevorzugt von 5 - 40% und besonders bevorzugt 5 - 30%.

Das erfindungsgemäße Verfahren zur Herstellung dickwandiger Bauteile umfasst die Schritte
a) Herstellung Keramikpulver: Nassmahlung mit geeigneter Mühle und anschließende Trocknung mit geeignetem Verfahren.
b) Mischen von Keramikpulver / Bindersystem (Herstellung Feedstock): Vormischung der Komponenten in geeignetem Aggregat wie Z- Haken-Kneter, Schnellmischer oder Extruder und anschließende Plastifizierung zu homogenem Feedstock in Z- Haken- Kneter, Doppelschneckenextruder oder Scherwalzenkompaktor.
c) Spritzgiessen: Spritzguss erfolgt auf Kolben oder Schneckenspritzgussmaschine
d) Entbindern: Entbinderung erfolgt rein thermisch oder zweistufig über Lösemittelextraktion mit anschließender thermischen Entbinderung. Die thermische Entbinderung erfolgt im Temperaturbereich zwischen 100 - 600°C, bevorzugt im Bereich von 150 - 500°C und besonders bevorzugt im Bereich von 200 - 400°C. Die Aufheizrate liegt im Bereich von 1 - 60 K/h, bevorzugt im Bereich von 1,5 - 50 K/h und besonders bevorzugt im Bereich 2 - 40 K/h.
e) Sintern: Die Sinterung erfolgt mittels geeignetem Sinterofen. Die Sinterung erfolgt im Direktbrand oder mittels Vorbrand und anschließendem heiß isostatischen Nachverdichten (HIP).

Die so hergestellten dickwandigen Bauteile zeichnen sich durch ein lunkerfreies, dichtes Gefüge aus.

Die erfindungsgemäßen Bauteile sind bevorzugt Bauteile aus dem Bereich der Medizintechnik, insbesondere eine Prothese oder ein Implantat. Das Implantat kann insbesondere ein Gelenksflächen-Implantat sein, was zur teilweisen Erneuerung von Gelenksflächen im menschlichen Körper dient. Bei den Gelenksflächen kann es sich beispielsweise um Flächen aus dem Schulter-, Hüft-,Knie- und dem gesamten Fußbereich handeln. Besonders bevorzugt sind die Bauteile Implantate bikondyläre Kniekomponenten

## Patentansprüche

1. Keramisches Werkstoff- und Bindersystem, auch als Feedstock bezeichnet, zum Spritzgießen von dickwandigen und/oder großvolumigen Bauteilen mit Wandstärken im Bereich von mehr als 5mm und/oder Volumen von mindestens 15 cm³, enthaltend ein Bindersystem, das eine Mischung aus mindestens zwei organischen Verbindungen ist und eine Keramik, die einen Aluminiumoxid-Chromoxid-Mischkristall und Zirkondioxid enthält und das Keramikpulver eine spezifische Oberfläche, gemessen nach der BET Methode, im Bereich von 8 - 30 m²/g, aufweist, und wobei die Korngröße des Zirkondioxids gemessen mittels Laser-Diffraktometrie im Bereich von 0,2 bis 1,5 µm und die durchschnittliche Korngröße des Aluminiumoxid-/Chromoxid-Mischkristalls im Bereich von 0,8 bis 1,5 µm liegt.

2. Keramisches Werkstoff- und Bindersystem nach Anspruch 1, wobei das Keramikpulver eine spezifische Oberfläche, gemessen nach der BET Methode, im Bereich von 10 - 25 m²/g und bevorzugt 11 - 18 m²/g aufweist.

3. Keramisches Werkstoff- und Bindersystem gemäß Anspruch 1 oder 2, wobei die Keramik den Aluminiumoxid-Chromoxid-Mischkristall mit einen Anteil von mindestens 70 Vol.-% mit einen Chromoxidanteil von 0,01 bis 2,32 Gew.-% bezogen auf Aluminiumoxid, aufweist, und 2 bis 30 Vol. % Zirkondioxid, eingelagert in den Aluminiumoxid-Chromoxid-Mischkristall, und das Zirkondioxid 0,27 bis 2,85 Mol% Yttriumoxid, bezogen auf die Mischung aus Zirkondioxid und Yttriumoxid, enthält und das Zirkondioxid überwiegend in der tetragonalen Modifikation vorliegt.

4. Keramisches Werkstoff- und Bindersystem nach einem der vorangegangenen Ansprüche, wobei die Keramik einen weiteren Mischkristall gemäß einer der allgemeinen Formeln Me¹Al₁₁₋ₓCrₓO₁₇, Me²Al₁₂₋ₓCrₓO₁₉, Me^{2'}Al₁₂₋ₓCrₓO₁₉ oder Me³Al₁₁₋ₓCrₓO₁₈ wobei Me¹ für ein Alkalimetall, Me² für ein Erdalkalimetall, Me^{2'} für Cadmium, Blei oder Quecksilber und Me³ für ein Seltenerdmetall steht, enthält.

5. Keramisches Werkstoff- und Bindersystem nach einem der vorangegangenen Ansprüche, wobei die Keramik einem weiteren Mischkristall der Formel SrAl₁₂₋ₓCrₓO₁₉, wobei x einen Wert von 0,0007 bis 0,045 hat, enthält.

6. Keramisches Werkstoff- und Bindersystem nach Anspruch 5, wobei die Keramik 70 bis 90 Volumenanteile Aluminiumoxid-Chromoxid Mischkristall mit einem Chromoxidanteil von 0,01 bis 2,32 Gew.-% bezogen auf Aluminiumoxid, 12 bis 22 Volumenanteile Zirkonoxid mit 0,27 bis 2,85 Mol% Yttriumoxid bezogen auf die Mischung aus Zirkondioxid und Yttriumoxid, und 1 bis 5 Volumenanteile Strontiumaluminat der Formel SrAl₁₂₋ₓCrₓO₁₉, wobei x einen Wert von 0,0007 bis 0,045 hat.

7. Keramisches Werkstoff- und Bindersystem nach Anspruch 5 oder 6, wobei die Körner des Mischkristalls der Formel SrAl₁₂₋ₓCrₓO₁₉, mit x = 0,0007 bis 0,045 ein Längen/Dickenverhältnis im Bereich von 5 : 1 bis 15 : 1 aufweisen und ihre Maximallänge dabei 12 µm und die Maximaldicke 1,5 µm beträgt.

8. Keramisches Werkstoff- und Bindersystem nach einem der vorangegangenen Ansprüche, wobei das Zirkondioxid zu einem Anteil von mehr als 95 Vol.-%, bevorzugt mehr als 98 Vol.-%, besonders bevorzugt mehr als 99 Vol.-% in tetragonaler Form vorliegt und wobei bis zu 5 Vol.-%, bevorzugt bis zu 2 Vol.-%,besonders bevorzugt bis zu 1 Vol.-% insgesamt in der kubischen und/oder monoklinen Modifikation vorliegen.

9. Keramisches Werkstoff- und Bindersystem nach einem der vorangegangenen Ansprüche, **dadurch gekennzeichnet, dass** das Bindersystem organische Verbindungen ausgewählt aus der Gruppe bestehend aus thermoplastischen Homo- oder Copolymeren auf Basis von Polyethylen PE, Polypropylen PP, Polyoxymethylen POM, Polyethylenglykol PEG, Polymethylenmethacrylat PMMA, Polyvinylacetat PVA, Polystyrol PS, Polyvinylbutyral PVB, Polycarbonat PC; Wachsen, wie Paraffinwachse, mikrokristalline Wachse, synthetische Hydrocarbonwachse, oxidische Polyethylenwachse, natürliche Wachse, und Dispergatoren, gesättigte und ungesättigte Monocarbonsäuren wie Laurinsäure, Palmitinsäure, Stearinsäure, Behensäure, Palmitoleinsäure, Ölsäure oder Mischungen daraus, Polyeethylenglykolalkylether, alkylierte Citrate, umfasst.

10. Keramisches Werkstoff- und Bindersystem nach einem der vorangegangenen Ansprüche, **dadurch gekennzeichnet, dass** das Bindersystem mindestens zwei organische Polymerverbindungen umfasst.

11. Keramisches Werkstoff- und Bindersystem nach Anspruch 10, **dadurch gekennzeichnet, dass** das Bindersystem zusätzlich einen Dispergator umfasst.

12. Keramisches Werkstoff- und Bindersystem nach Anspruch 11, **dadurch gekennzeichnet, dass** das Bindersystem PVB mit einem Anteil am Bindersystem im Bereich von 5 - 60%, bevorzugt von 5 - 55% und besonders bevorzugt von 5 - 50%, PEG mit einem Anteil am Bindersystem im Bereich von 10 - 80%, bevorzugt von 10 - 75% und besonders bevorzugt von 10 - 70% und gesättigte Monocarbonsäure mit einem Anteil am Bindersystem im Bereich von 5 - 50%, bevorzugt von 5 - 40% und besonders bevorzugt 5 - 30%.

13. Verfahren zur Herstellung von dickwandigen und/oder großvolumigen Bauteilen, wobei das Bauteil mittels Spritzgiessen eines keramischen Werkstoff- und Bindersystems nach einem der Ansprüche 1 bis 12 geformt wird, enthaltend ein Bindersystem, das eine Mischung aus mindestens zwei organischen Verbindungen ist und eine Keramik, die einen Aluminiumoxid-Chromoxid-Mischkristall und Zirkondioxid enthält und das Keramikpulver eine spezifische Oberfläche, gemessen nach der BET Methode, im Bereich von 8 -30 m²/g, bevorzugt 10 - 25 m²/g und besonders bevorzugt 11 - 18 m²/g aufweist, und wobei die Korngröße des Zirkondioxids gemessen mittels Laser-Diffraktometrie im Bereich von 0,2 bis 1,5 µm und die durchschnittliche Korngröße des Aluminiumoxid-/Chromoxid-Mischkristalls im Bereich von 0,8 bis 1,5 µm liegt.

14. Verfahren nach Anspruch 13, wobei das Verfahren folgende Schritte umfasst:
a. Nass mahlen und trocknen des Keramikpulvers,
b. Vormischen des Keramikpulvers mit dem Binder und anschließendes plasifizieren zu einem homogenen Feedstock,
c. Spritzgiessen auf Kolben oder Schneckenspritzgussmaschine,
d. Entbinderung rein thermisch oder zweistufig über Lösemittelextraktion mit anschließender thermischen Entbinderung im Temperaturbereich zwischen 100 - 600°C, bevorzugt im Bereich von 150 - 500°C und besonders bevorzugt im Bereich von 200 - 400°C, wobei die Aufheizrate im Bereich von 1 - 60 K/h, bevorzugt im Bereich von 1,5 - 50 K/h und besonders bevorzugt im Bereich 2 - 40 K/h liegt,
e. Anschließende Sinterung mittels geeignetem Sinterofen im Direktbrand oder mittels Vorbrand und anschließendem heiß isostatischen Nachverdichten (HIP),
f. Entnahme des Bauteils.

15. Verfahren nach Anspruch 13 oder 14, worin das Bauteil eine Prothese oder ein Implantat ist.

## Claims

1. Ceramic material-and-binder system, also referred to as feedstock, for injection-molding thick-walled and/or large-volume components having wall thicknesses in the range of more than 5 mm and/or volumes of at least 15 cm³, containing a binder system that is a mixture of at least two organic compounds and a ceramic material containing an aluminum oxide-chromium oxide mixed crystal and zirconium dioxide, and the ceramic powder has a specific surface area, measured by the BET method, in the range of from 8-30 m²/g, and wherein the grain size of the zirconium dioxide, measured by laser diffractometry, is in the range of from 0.2 to 1.5 µm and the average grain size of the aluminum oxide/chromium oxide mixed crystal is in the range of from 0.8 to 1.5 µm.

2. Ceramic material-and-binder system according to claim 1, wherein the ceramic powder has a specific surface area, measured by the BET method, in the range of from 10-25 m²/g and preferably 11-18 m²/g.

3. Ceramic material-and-binder system according to either claim 1 or claim 2, wherein the ceramic material has the aluminum oxide-chromium oxide mixed crystal at a proportion of at least 70 vol.% with a chromium oxide content of from 0.01 to 2.32 wt.%, based on aluminum oxide, and 2 to 30 vol.% zirconium dioxide incorporated in the aluminum oxide-chromium oxide mixed crystal, and the zirconium dioxide contains 0.27 to 2.85 mol.% yttrium oxide, based on the mixture of zirconium dioxide and yttrium oxide, and the zirconium dioxide is predominantly present in the tetragonal modification.

4. Ceramic material-and-binder system according to any of the preceding claims, wherein the ceramic material contains an additional mixed crystal according to one of the general formulas Me¹Al₁₁₋ₓCrₓO₁₇, Me²Al₁₂₋ₓCrₓO₁₉, Me^{2'}Al₁₂₋ₓCrₓO₁₉ or Me³Al₁₁₋ₓCrₓO₁₈, where Me¹ is an alkali metal, Me² is an alkaline earth metal, Me^{2'} is cadmium, lead or mercury, and Me³ is a rare earth metal.

5. Ceramic material-and-binder system according to any of the preceding claims, wherein the ceramic material contains an additional mixed crystal of formula SrAl₁₂₋ₓCrₓO₁₉, where x has a value of from 0.0007 to 0.045.

6. Ceramic material-and-binder system according to claim 5, wherein the ceramic material 70 to 90 parts by volume aluminum oxide-chromium oxide mixed crystal with a chromium oxide content of from 0.01 to 2.32 wt.% based on aluminum oxide, 12 to 22 parts by volume zirconium oxide with 0.27 to 2.85 mol.% yttrium oxide based on the mixture of zirconium dioxide and yttrium oxide, and 1 to 5 parts by volume strontium aluminate of formula SrAl₁₂₋ₓCrₓO₁₉, where x has a value of from 0.0007 to 0.045.

7. Ceramic material-and-binder system according to either claim 5 or claim 6, wherein the grains of the mixed crystal of formula SrAl₁₂₋ₓCrₓO₁₉, where x = 0.0007 to 0.045, have a length/thickness ratio in the range of from 5:1 to 15:1 and their maximum length is 12 µm and the maximum thickness is 1.5 µm.

8. Ceramic material-and-binder system according to any of the preceding claims, wherein the zirconium dioxide is present in tetragonal form in a proportion of more than 95 vol.%, preferably more than 98 vol.%, particularly preferably more than 99 vol.%, and wherein up to 5 vol.%, preferably up to 2 vol.%, particularly preferably up to 1 vol.%, in total is present in the cubic and/or monoclinic modification.

9. Ceramic material-and-binder system according to any of the preceding claims, **characterized in that** the binder system comprises organic compounds selected from the group consisting of thermoplastic homopolymers or copolymers based on polyethylene PE, polypropylene PP, polyoxymethylene POM, polyethylene glycol PEG, polymethylene methacrylate PMMA, polyvinyl acetate PVA, polystyrene PS, polyvinyl butyral PVB, polycarbonate PC; waxes such as paraffin waxes, microcrystalline waxes, synthetic hydrocarbon waxes, oxide polyethylene waxes, natural waxes, and dispersants, saturated and unsaturated monocarboxylic acids such as lauric acid, palmitic acid, stearic acid, behenic acid, palmitoleic acid, oleic acid, or mixtures thereof, polyethylene glycol alkyl ethers, and alkylated citrates.

10. Ceramic material-and-binder system according to any of the preceding claims, **characterized in that** the binder system comprises at least two organic polymer compounds.

11. Ceramic material-and-binder system according to claim 10, **characterized in that** the binder system additionally comprises a dispersant.

12. Ceramic material-and-binder system according to claim 11, **characterized in that** the binder system PVB in a proportion of the binder system in the range of from 5-60%, preferably 5-55% and particularly preferably 5-50%, PEG in a proportion of the binder system in the range of from 10-80%, preferably 10-75% and particularly preferably 10-70%, and saturated monocarboxylic acid in a proportion of the binder system in the range of from 5-50%, preferably 5-40% and particularly preferably 5-30%.

13. Method for producing thick-walled and/or large-volume components, wherein the component is formed by injection molding a ceramic material-and-binder system according to any of claims 1 to 12, containing a binder system that is a mixture of at least two organic compounds and a ceramic material containing an aluminum oxide-chromium oxide mixed crystal and zirconium dioxide, and the ceramic powder has a specific surface area, measured by the BET method, in the range of from 8-30 m²/g, preferably 10-25 m²/g and particularly preferably 11-18 m²/g, and wherein the grain size of the zirconium dioxide, measured by laser diffractometry, is in the range of from 0.2 to 1.5 µm and the average grain size of the aluminum oxide/chromium oxide mixed crystal is in the range of from 0.8 to 1.5 µm.

14. Method according to claim 13, wherein the method comprises the following steps:
a. wet grinding and drying the ceramic powder,
b. premixing the ceramic powder with the binder and then plasticizing to form a homogeneous feedstock,
c. injection molding on pistons or a screw injection-molding machine,
d. debinding purely thermally or in two stages by means of solvent extraction with subsequent thermal debinding in the temperature range between 100-600°C, preferably in the range of from 150-500°C and particularly preferably in the range of from 200-400°C, the heating rate being in the range of from 1-60 K/h, preferably in the range of from 1.5-50 K/h and particularly preferably in the range of from 2-40 K/h,
e. subsequent sintering by means of a suitable sintering furnace in direct firing or by means of pre-firing and subsequent hot isostatic pressing (HIP),
f. removing the component.

15. Method according to either claim 13 or claim 14, wherein the component is a prosthesis or an implant.

## Revendications

1. Système de matériau et de liant céramique, également appelé matière première, pour le moulage par injection de composants à paroi épaisse et/ou à grand volume avec des épaisseurs de paroi comprises entre plus de 5 mm et/ou des volumes d'au moins 15 cm³, contenant un système de liant qui est un mélange d'au moins deux composés organiques et une céramique, laquelle contient un cristal mixte d'oxyde d'aluminium-oxyde de chrome et de l'oxyde de zirconium, et la poudre céramique présente une surface spécifique, mesurée selon la méthode BET, comprise entre 8 et 30 m²/g, et dans lequel la granulométrie de l'oxyde de zirconium mesurée par diffractométrie laser est comprise entre 0,2 et 1,5 µm et la granulométrie moyenne du cristal mixte d'oxyde d'aluminium-oxyde de chrome est comprise entre 0,8 et 1,5 µm.

2. Système de matériau et de liant céramique selon la revendication 1, dans lequel la poudre céramique présente une surface spécifique, mesurée selon la méthode BET, comprise entre 10 et 25 m²/g et de préférence entre 11 et 18 m²/g.

3. Système de matériau et de liant céramique selon la revendication 1 ou 2, dans lequel la céramique comporte le cristal mixte d'oxyde d'aluminium-oxyde de chrome dans une proportion d'au moins 70 % en volume et dans une proportion en oxyde de chrome de 0,01 à 2,32 % en poids par rapport à l'oxyde d'aluminium, et de 2 à 30 % en volume d'oxyde de zirconium incorporé dans le cristal mixte d'oxyde d'aluminium-oxyde chrome, et l'oxyde de zirconium contient 0,27 à 2,85 % en mole d'oxyde d'yttrium par rapport au mélange d'oxyde de zirconium et d'oxyde d'yttrium, l'oxyde de zirconium étant présent principalement dans la modification tétragonale.

4. Système de matériau et de liant céramique selon l'une des revendications précédentes, dans lequel la céramique contient un autre cristal mixte selon l'une des formules générales Me'Al₁₁₋ₓCrₓO₁₇, Me²Al₁₂₋ₓCrₓO₁₉, Me^{2'}Al₁₂₋ₓCrₓO₁₉ ou Me³Al₁₁₋ₓCrₓO₁₈, où Me¹ représente un métal alcalin, Me² représente un métal alcalino-terreux, Me^{2'} représente le cadmium, le plomb ou le mercure, et Me³ représente un métal des terres rares.

5. Système de matériau et de liant céramique selon l'une des revendications précédentes, dans lequel la céramique contient un autre cristal mixte de formule SrAl₁₂₋ₓCrₓO₁₉ dans laquelle x a une valeur comprise entre 0,0007 et 0,045.

6. Système de matériau et de liant céramique selon la revendication 5, dans lequel la céramique présente 70 à 90 proportions volumiques de cristal mixte d'oxyde d'aluminium-oxyde de chrome comportant une proportion d'oxyde de chrome de 0,01 à 2,32 % en poids par rapport à l'oxyde d'aluminium, 12 à 22 proportions volumiques d'oxyde de zirconium présentant 0,27 à 2,85 % en mole d'oxyde d'yttrium par rapport au mélange d'oxyde de zirconium et d'oxyde d'yttrium, et 1 à 5 proportions volumiques d'aluminate de strontium de formule SrAl₁₂₋ₓCrₓO₁₉ dans laquelle x a une valeur comprise entre 0,0007 et 0,045.

7. Système de matériau et de liant céramique selon la revendication 5 ou 6, dans lequel les grains du cristal mixte de formule SrAl₁₂₋ₓCrₓO₁₉ dans laquelle x = 0,0007 à 0,045, ont un rapport longueur/épaisseur compris entre 5:1 à 15:1, et ont une longueur maximale de 12 µm et une épaisseur maximale de 1,5 µm.

8. Système de matériau et de liant céramique selon l'une des revendications précédentes, dans lequel le dioxyde de zirconium est présent sous forme tétragonale dans une proportion supérieure à 95 % en volume, de préférence supérieure à 98 % en volume, de manière particulièrement préférée supérieure à 99 % en volume, et jusqu'à 5 % en volume, de préférence jusqu'à 2 % en volume, de manière particulièrement préférée jusqu'à 1 % en volume étant globalement présents dans la modification cubique et/ou monoclinique.

9. Système de matériau et de liant céramique selon l'une des revendications précédentes, **caractérisé en ce que** le système de liant comprend des composés organiques choisis dans le groupe constitué par des homopolymères ou des copolymères thermoplastiques à base de polyéthylène (PE), de polypropylène (PP), de polyoxyméthylène (POM), de polyéthylèneglycol (PEG), de polyméthacrylate de méthyle (PMMA), d'acétate de polyvinyle (PVA), de polystyrène (PS), de polyvinylbutyral (PVB), de polycarbonate (PC) ; des cires telles que des cires de paraffine, des cires microcristallines, des cires d'hydrocarbures synthétiques, des cires de polyéthylène oxydées, des cires naturelles et des agents dispersants, des acides monocarboxyliques saturés et insaturés tels que l'acide laurique, l'acide palmitique, l'acide stéarique, l'acide béhénique, l'acide palmitoléique, l'acide oléique ou leurs mélanges, un alkyléther de polyéthylèneglycol et des citrates alkylés.

10. Système de matériau et de liant céramique selon l'une des revendications précédentes, **caractérisé en ce que** le système de liant comprend au moins deux composés polymères organiques.

11. Système de matériau et de liant céramique selon la revendication 10, **caractérisé en ce que** le système de liant comprend également un agent dispersant.

12. Système de matériau et de liant céramique selon la revendication 11, **caractérisé en ce que** le système de liant contient le PVB dans une proportion du système de liant comprise entre 5 et 60 %, de préférence entre 5 et 55 % et de manière particulièrement préférée entre 5 et 50 %, le PEG dans une proportion du système de liant comprise entre 10 et 80 %, de préférence entre 10 et 75 % et de manière particulièrement préférée entre 10 et 70 %, et l'acide monocarboxylique saturé dans une proportion du système de liant comprise entre 5 et 50 %, de préférence entre 5 et 40 % et de manière particulièrement préférée entre 5 et 30 %.

13. Procédé de fabrication de composants à paroi épaisse et/ou à grand volume, dans lequel le composant est formé par moulage par injection d'un système de matériau et de liant céramique selon l'une des revendications 1 à 12, contenant un système de liant, qui est un mélange d'au moins deux composés organiques, et une céramique qui contient un cristal mixte d'oxyde d'aluminium-oxyde de chrome et de dioxyde de zirconium, et la poudre céramique présente une surface spécifique, mesurée selon la méthode BET, comprise entre 8 et 30 m²/g, de préférence entre 10 et 25 m²/g et de manière particulièrement préférée entre 11 et 18 m²/g, et dans lequel la granulométrie de l'oxyde de zirconium mesurée par diffractométrie laser est comprise entre 0,2 et 1,5 µm et la granulométrie moyenne du cristal mixte d'oxyde d'aluminium-oxyde de chrome est comprise entre 0,8 et 1,5 µm.

14. Procédé selon la revendication 13, le procédé comprenant les étapes suivantes :
a. Broyage humide et séchage de la poudre céramique,
b. Prémélange de la poudre de céramique avec le liant, suivi d'une plastification de façon à obtenir une matière première homogène,
c. Moulage par injection sur piston ou sur machine de moulage par injection à vis,
d. Découplage purement thermique ou en deux étapes par extraction par solvant suivi d'un découplage thermique dans la plage de température de 100 à 600 °C, de préférence dans la plage de 150 à 500 °C et de manière particulièrement préférée de 200 à 400 °C, la vitesse de chauffage étant comprise entre 1 et 60 K/h, de préférence entre 1,5 et 50 K/h et de manière particulièrement préférée entre 2 et 40 K/h,
e. Frittage ultérieur au moyen d'un four de frittage approprié en cuisson directe ou au moyen d'une cuisson préalable suivie d'un post-compactage isostatique à chaud (HIP),
f. Retrait du composant.

15. Procédé selon la revendication 13 ou 14, dans lequel le composant est une prothèse ou un implant.
